# EUROPÄISCHE PATENTANMELDUNG

(11) **EP 2 523 313 A2**
(43) Veröffentlichungstag der Anmeldung: **14.11.2012**
(21) Anmeldenummer: 12165777.9
(22) Anmeldetag: 26.04.2012
(51) Int. Cl.: H02K 3/28

(54) **Elektrische Maschine mit Wellenwicklung und parallelen Stromzweigen**

(30) Priorität: 10.05.2011 DE 102011075574; 24.04.2012 DE 102012206684
(71) Anmelder: ROBERT BOSCH GMBH, 70442 Stuttgart (DE)
(72) Erfinder: Alexander, Marcus, 71640 Ludwigsburg (DE); Ruiz De Larramendi, Miguel, 71638 Ludwigsburg (DE)

(57) **Zusammenfassung**

Stator einer elektrischen Maschine, aufweisend ein Jochelement (4), eine Mehrzahl von Zahnelementen (6), welche vom Jochelement (4) abstehen, wobei zwischen zwei Zahnelementen (6) jeweils eine Nut (8) ausgebildet ist, wobei jede Nut (8) im Bereich des Übergangs zwischen Jochelement (4) und Zahnelement (6) einen Nutgrund (10) aufweist, wobei in den Nuten eine Mehrphasenwicklung vorgesehen ist, die aus Zweigleitungen (14) besteht, die in den Nuten jeweils in einer vorbestimmten Lage (12) bezüglich dem Nutgrund (10) angeordnet und jeweils einer elektrischen Phase (18) zugeordnet sind, dadurch gekennzeichnet, dass zumindest eine Zweigleitung (14) zumindest einmal auf ihrem Verlauf durch die Nuten (8) ihre Lage (12) mit zumindest einer anderen Zweigleitung (14) tauscht.

## Beschreibung

Die vorliegende Erfindung betrifft Antriebe für Hybrid- und Elektrofahrzeuge. Insbesondere betrifft die vorliegende Erfindung eine elektrische Maschine für Hybrid- und Elektrofahrzeuge mit einer Wechselstromwellenwicklung.

### Stand der Technik

Im Bereich der Hybrid- und Elektrofahrzeuge werden für den Antrieb elektrische Maschinen verwendet, welche elektrische Energie verbrauchen, um hierdurch eine Antriebsleistung für ein Fahrzeug bereitzustellen oder aber mechanische Arbeit in elektrische Energie umzuwandeln vermögen.

Bekannte elektrische Maschinen für Hybrid- und Elektrofahrzeuge werden meist mit Spulenwechselstromwicklungen gefertigt. Hierbei werden die Wicklungen im Wesentlichen kreisförmig zwischen zwei Nuten beispielsweise eines Stators einer elektrischen Maschine geführt bzw. gewickelt. Um bei der Auslegung auf niedrige spannungshaltende Windungszahlen mit fertigungstechnisch geeigneten Drahtstärken der Stromleiter zu gelangen, werden entsprechende Wicklungen oft mit mehreren parallelen Stromzweigen realisiert. Parallele, gegeneinander kurzgeschlossene Drähte mit vergleichsweise kleiner Drahtstärke bzw. kleinem Drahtdurchmesser werden parallel zusammengeschlossen, um hierdurch einen Effekt vergleichbar einer Wicklung mit einem vergleichsweise großen Drahtdurchmesser zu erhalten.

Als Alternativ zu einer solchen Spulenwicklung mögen Wicklungen gleichfalls als Wellenwicklung ausgeführt werden, was bei automatisierten Fertigungseinrichtungen eine effizientere und ökonomisch günstigere Herstellung ergeben mag. Bei einer Wellenwicklung werden die einzelnen Leiter nicht kreisförmig zwischen zwei Nuten geführt, sondern schlingen sich entsprechend einer Wellenform sukzessive durch sämtliche Nuten, beispielsweise eines Stators.

Mit bekannten Wellenwicklungen lassen sich jedoch keine Wicklungen mit mehreren elektromagnetisch symmetrischen parallelen Stromzweigen realisieren.

### Offenbarung der Erfindung

Ein Aspekt der vorliegenden Erfindung mag somit die Bereitstellung einer Komponente einer elektrischen Maschine sein, welche eine Wellenwicklung bei parallelen Stromzweigen realisiert.

Im Lichte dieses Aspekts wird eine Komponente für eine elektrische Maschine, eine elektrische Maschine sowie ein Fahrzeug, insbesondere ein Automobil, aufweisend eine erfindungsgemäße Komponente oder eine erfindungsgemäße elektrische Maschine, gemäß den unabhängigen Ansprüchen bereitgestellt. Bevorzugte Ausgestaltungen ergeben sich aus den abhängigen Ansprüchen.

Eine Komponente für eine elektrische Maschine weist im Kontext der vorliegenden Erfindung ein Jochelement auf, von welchem eine Mehrzahl von Zahnelementen abstehen. Die Zahnelemente sind im Wesentlichen parallel und zueinander beabstandet angeordnet und bilden durch diesen Abstand zwischen zwei Zahnelementen eine im Wesentlichen rechteckigförmige Nut aus.

Eine Mehrzahl von entsprechenden Zahnelementen ergibt hierbei eine entsprechende Anzahl an Nuten. Aufgrund der kreisförmigen Anordnung der Zahnelemente, um beispielsweise einen Stator einer elektrischen Maschine auszubilden, weist eine entsprechende Komponente eine gleiche Anzahl von Zahnelementen und Nuten auf.

Ein Leiterelement eines Stromzweiges wird nun auf bekannte Weise in den Nuten geführt und somit um die Zahnelemente gewickelt.

Allgemein mag angeführt sein, dass die der Wert von (Nutenzahn/Phasenzahl) durch die Anzahl von parallelen Zweigen ganzzahlig teilbar sein muss.

Ein Leiterelement mag neben einem einzelnen auch als eine Mehrzahl an parallelen Drähten bzw. Drahtelementen verstanden werden, die gemeinschaftlich das Leiterelement ausbilden. Im Kontext der vorliegenden Erfindung betrifft ein Leiterabschnitt insbesondere den Bereich eines Leiterelementes welcher in einer Nut, somit zwischen zwei Zahnelementen, angeordnet ist.

Bei herkömmlichen Wellenwicklungen mit parallelen Stromzweigen, zum Beispiel zwei parallelen Zweigen, mag ein Leiterelement eines Stromzweiges in Bezug auf ein zweites Leiterelement des zweiten, parallelen Stromzweiges einen unterschiedlichen Abstand vom Nutgrund bzw. von einem Jochelement aufweisen. Der Abstand vom Nutgrund wird im Weiteren als eine Nutschicht bzw. als eine vorbestimmte Lage bzw. Lage eines Leiterelementes, Leiterabschnittes bzw. einer Leitung, sei es Einzelleitung oder Zweigleitung, in der Nut bezeichnet.

Wird beispielsweise eine Wellenwicklung mit zwei parallelen Stromzweigen ausgeführt, so ist das Leiterelement des ersten Zweiges am Nutgrund, das Leiterelement des zweiten Zweiges oberhalb des ersten Zweiges im Luftspalt angeordnet. Wegen der unterschiedlichen Nutstreuungen mögen hierdurch in den beiden Zweigen unterschiedliche Spannungen induziert werden. Aufgrund der parallelen Ausgestaltung der beiden Leiterelemente können hierdurch Kreisströme hervorgerufen werden, welche zu zusätzlichen Kupferverlusten, einer höheren Erwärmung und reduziertem Wirkungsgrad führen mag.

Gemäß dem technischen Konzept der vorliegenden Erfindung wird die Realisierung einer Wechselstromwellenwicklung mit mehreren parallelen Stromzweigen bereitgestellt, welche keine bzw. reduzierte Kreisströme gegenüber einer herkömmlichen Wellenwicklung hervorrufen.

Durch eine Reduzierung der auftretenden Kreisströme bzw. deren Vermeidung, insbesondere in der Ständerwicklung eines Stators, ergeben sich niedrigere Kupferverluste in der Wicklung, ein höherer Wirkungsgrad der Maschine sowie eine niedrigere Erwärmung eines Stators.

Eine Erhöhung der Anzahl von parallelen Stromzweigen mag verschiedene Vorteile aufweisen. Zunächst ergibt sich eine erhöhte Flexibilität in der Wicklungsanpassung, beispielsweise um eine elektrische Maschine gemäß spezifischen Vorgaben auszugestalten bzw. an bestimmte Anforderungen anzupassen. Insbesondere mag sich hierdurch die Anzahl der Leiterelemente je Nut in kleinen Schritten variieren lassen. Eine Erhöhung der Anzahl von parallelen Stromzweigen mag es im Weiteren erlauben, kleinere Drahtdurchmesser zu verwenden bzw. den Drahtdurchmesser im Vergleich zu einer geringeren Anzahl von parallelen Stromzweigen zu reduzieren. Hierdurch mag ein vereinfachter Einziehprozess der Wicklungen bzw. der einzelnen Leiterelemente in die Nut möglich sein, wobei Leiterelemente mit einem geringeren Durchmesser von einem Wickelkopf einfacher verformt werden mögen. Weiterhin mag eine Verlusterhöhung durch Stromverdrängungseffekte vermieden werden. Eine niedrigere Anzahl paralleler Drähte pro Leiterelement mag einen Fertigungsprozess vereinfachen und hierdurch Herstellungskosten reduzieren.

In der nachfolgenden Tabelle wird dargestellt, wie mit einer Erhöhung der Anzahl paralleler Zweige, einer Reduzierung des Drahtdurchmessers oder der Anzahl paralleler Drähte je Leiterelement bei identischen elektromagnetischen Eigenschaften (Spannungshaltende Windungszahl) erzielt werden mag.

**Tabelle 1**

| | | | | |
|---|---|---|---|---|
| 1 | Zahl paralleler Zweige | 1 | 2 | 4 |
| 2 | Leiter (L) pro Nut (N) | L/N | 2 * (L/N) | 4 * (L/N) |
| 3 | Spannungshaltende Windungszahl | w1 | w1 | w1 |
| 4 | Drahtdurchmesser | D_{CU} | 1/√2 * D_{CU} | 1/√4 * D_{CU} |
| 5 | Anzahl paralleler Drähte/Leiter | asp | 1/2 * asp | 1/4 * asp |

Werte der Zeile 4 beruhen auf der Annahme, dass ein Kupferfüllfaktor und die Anzahl paralleler Drähte konstant gehalten wird, Zeile 5 erfolgt unter der Annahme, dass der Kupferfüllfaktor und der Drahtdurchmesser konstant gehalten werden.

Um Kreisströme in den parallel geschalteten Stromzweigen zu reduzieren bzw. zu vermeiden, sollte sichergestellt sein, dass jeder Stromzweig pro Nutschicht bzw. pro vorbestimmter Lage, damit dem Anstand eines Leiters vom Nutgrund, dieselbe Anzahl an Leiterelementen enthält und die Summe der induzierten Spannungen in jedem parallelen Stromzweig identisch ist. Eine Nutschicht bzw. Lage bezeichnet in diesem Zusammenhang eine Ebene in der Nut, in welcher ein Leiterelement eines Stromzweiges angeordnet ist. Eine solche Nutschicht mag beispielsweise als eine Beabstandung bzw. eine Ebene in einem (definierten) Abstand von einem Punkt im Joch, beispielsweise dem Jochgrund bzw. Nutgrund, gesehen werden.

Bei einer Anordnung der Stromzweige in der Nut derart, dass jede Nutschicht dieselbe Anzahl an Leiterabschnitten enthält, mag somit sichergestellt werden, dass die über die gesamte Stromzweiglänge in den jeweiligen Leiterelementen abschnittsweise induzierte Spannung einen derartigen Gesamtwert annimmt, welcher gleichfalls dem Gesamtwert in einem parallelen Stromzweig aufgrund einer vergleichbaren bzw. symmetrischen Anordnung, insbesondere rotationssymmetrischen Anordnung, entspricht. Aufgrund der hieraus resultierenden Gleichheit der Spannungen entsteht kein bzw. nur ein geringer Kreisstrom.

Die einzelnen Leitungen eines Stromzweiges sollen somit, betrachtet über alle Nuten und Lagen, eine im Wesentlichen gemittelt identische Verteilung aufweisen wie die einzelnen Leitungen eines weiteren Stromzweiges bzw. aller weiteren Stromzweige.

In anderen Worten betrifft ein Aspekt der vorliegenden Erfindung die Vermeidung von Ausgleichsströmen in parallelen Stromzweigen bzw. zwischen parallelen Stromzweigen gleicher Phase.

Hieraus ergibt sich, dass die Summe der induzierten Spannungen in jedem parallelen Stromzweig im Wesentlichen identisch sein soll, was durch eine adäquate Verteilung der Leiterelemente in den Nuten beeinflusst werden mag.

Weiterhin mag somit gefordert sein, dass die Streuinduktivitäten der Nutquerfelder in jedem parallelen Stromzweig gleicher Phase im Wesentlichen identisch sein sollen, was durch eine Anordnung der Leiterelemente derart, dass jeder parallele Stromzweig je Phase die im Wesentliche identische Anzahl an Leiterabschnitten je Nutschicht aufweist, realisiert werden mag.

Ausführungsbeispiele der vorliegenden Erfindung sind in den Zeichnungen dargestellt und in der nachfolgenden Beschreibung näher erläutert.

Es zeigen
- Figuren 1a,b: einen Schichtaufbau der parallelen Stromzweige, der in einer Nut angeordneten Nutschichten mit zugehörigen Leiterelementen;
- Figur 2: einen Vergleich zwischen einer Spulenwicklung und einer Wellenwicklung;
- Figuren 3a-e: eine exemplarische Ausgestaltung einer Wellenwicklung mit zwei parallelen Stromzweigen und acht Nutschichten;
- Figur 4: den beginnenden Wicklungsverlauf der beiden Stromzweige gemäß Figur 3;
- Figuren 5a-e: eine Splitwave-Wellenwicklung mit zwei parallelen Zweigen, verflechtet sowie acht Nutschichten;
- Figur 6: den beginnenden Wicklungsverlauf der beiden Stromzweige gemäß Figur 5;
- Figuren 7a-e: eine exemplarische Ausgestaltung einer Splitwave-Wellenwicklung mit zwei parallelen Zweigen, gekreuzt, mit acht Nutschichten;
- Figuren 8a-e: eine exemplarische Ausgestaltung einer Wellenwicklung mit vier parallelen Zweigen und 16 Nutschichten,
- Figuren 9a-e: eine exemplarische Ausgestaltung einer Wellenspulenwicklung mit zwei parallelen Zweigen sowie acht Nutschichten, und
- Figur 10: eine exemplarische Seitenansicht einer Wellenwicklung mit zwei parallelen Stromzweigen und 4 Nutschichten gemäß der vorliegenden Erfindung.

### Ausführungsformen der Erfindung

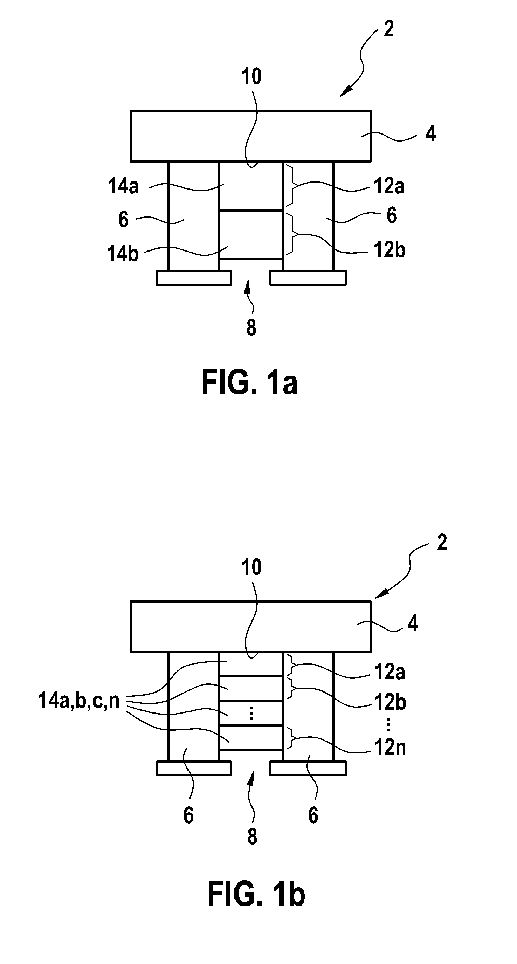

In Figur 1a dargestellt ist ein Querschnitt durch ein Element 2 einer elektrischen Maschine.

Exemplarisch zwei parallele Stromzweige, welche angeordnet sind in einer ersten Nutschicht bzw. einer ersten vorbestimmten Lage 12a sowie in einer zweiten Nutschicht bzw. einer zweiten vorbestimmten Lage 12b bzw. in einer Oberschicht und einer Unterschicht stellen in sich abgeschlossene Leiterelemente 14a,b dar. Jedes Leiterelement 14a,b der Nutschichten 12a,b mag eine in sich geschlossene Wicklung von einem durchgängigen Kupferdraht sein. In anderen Worten ist je Nutschicht bzw. Lage 12a,b eine Zweigleitung 14a,b einer Phase 18 angeordnet, zumindest bestehend aus einer Einzelleitung oder aber auch einer Mehrzahl von Einzelleitungen, welche zusammen die Zweigleitung ergeben. Die Nutschicht stellt sich dabei im Wesentlichen als ein definierter, vorbestimmter Abstand einer Leitung zum Nutgrund 10 dar.

Der Querschnitt zeigt Jochelement 4, von welchem exemplarisch zwei Zahnelemente 6 abgehen. Nut 8 ist zwischen Zahnelementen 6 angeordnet. Aufgrund des unterschiedlichen Abstandes der Nutschicht 12a sowie der Nutschicht 12b vom Jochelement 4 bzw. vom Nutgrund 10 mögen bei paralleler Verschaltung der Leiterelemente 14a,b in diesen unterschiedliche Spannungen induziert und somit ein Kreisstrom verursacht werden.

Gemäß einem Aspekt der vorliegenden Erfindung wird wie in Figur 1b dargestellt die Nut 8 in eine Mehrzahl von Nutschichten bzw. vorbestimmte Lagen 12a,b...n aufgeteilt. Einzelne Leiterelemente 14a,b...n der Zweigleitungen 14 sind den Nutschichten bzw. Lagen 12a,b...n zugeordnet. Zur Reduktion bzw. Minimierung von Kreisströmen werden die einzelnen Leiterelemente 14a,b...n in den einzelnen Nuten 8 des Elementes 2 nicht identisch wiederkehrend, wie in Figur 1b dargestellt, angeordnet, sondern verändern ihre Zuordnung zu den einzelnen Nutschichten 12a,b...n, z.B. von Nut 8 zu Nut 8.

Die einzelnen Leitungen variieren somit im Verlauf durch die Nuten 8 ihre Nutschichten bzw. ihre vorbestimmten Lagen 12 bzw. tauschen diese mit einer weiteren, parallelen Leitung desselben Stromzweiges bzw. derselben Phase. Im Wesentlich soll hierdurch ein über alle Nuten 8 und Nutschichten bzw. Lagen 12, genauer Abstände zum Nutgrund 10, gemittelt gleichmäßige Verteilung der Leitungen einer Phase erzielt werden, um einen möglicherweise auftretenden Kreisstrom zu minimieren bzw. zu verhindern.

Hierbei werden die einzelnen Leiterelemente 14a...n, bezogen auf das vollständige Element 2, derart angeordnet, dass jeder Stromzweig bzw. jedes Leiterelement 14a,b...n mit seinen in einer Nutschicht 12a,b...n liegenden Leiterabschnitten 16, dieselbe Anzahl an Leiterabschnitten 16 je Nutschicht 12a,b...n enthält und somit im Wesentlichen identische induzierte Einzelspannungen je Leiterabschnitt 16 im Stromzweig auftreten. Hierdurch wird sichergestellt, dass auch zwei parallele Stromzweige eine im Wesentlichen identische Induktionsspannung erhalten, wodurch ein Kreisstrom reduziert bzw. wirksam vermieden werden mag.

Einzelne beispielhafte Varianten der Wickelschemata, exemplarisch dargestellt bei einer dreiphasigen Statorwicklung mit 24 Nuten, sind in den nachfolgenden Figuren dargestellt. In den nachfolgenden exemplarischen Ausgestaltungen ist der Stator im Stern geschaltet. Alle Wicklungsvarianten können jedoch unter Zugrundelegung des allgemeinen Fachwissens auf eine Dreieckschaltung übertragen werden.

Im Folgenden werden die drei Grundvarianten "fundamental", "verflechtet" und "gekreuzt" dargestellt. Diese Grundvarianten unterscheiden sich in der Reihenfolge, in welcher die Leiter in die einzelnen Nuten 8 gelegt werden.

Weiterhin wird als eine Variante eine sogenannte Wellenspulenwicklung bereitgestellt, welche eine Mischung zwischen Wellenwicklung und Spulenwicklung darstellt.

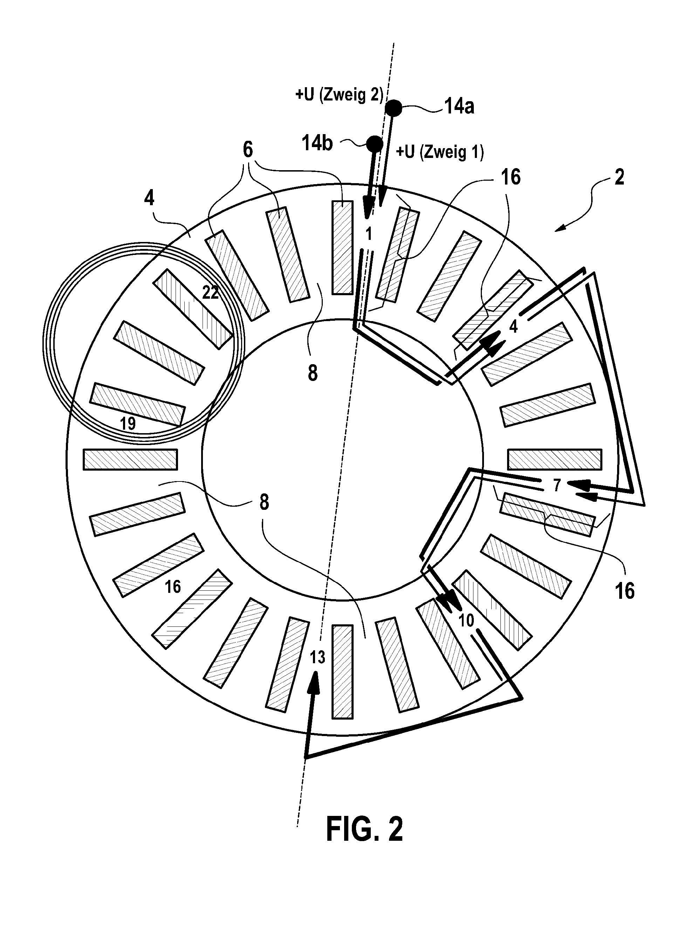

Weiter Bezug nehmend auf Figur 2 wird ein Vergleich zwischen einer Spulenwicklung und einer Wellenwicklung dargestellt.

Auf der im Wesentlichen linken Seite des Elementes 2 in Fig. 2 ist eine Spulenwicklung skizziert, während auf der im Wesentlichen rechten Seite des Elementes 2 in Fig. 2 eine Wellenwicklung einer Phase U mit zwei Stromzweigen dargestellt ist.

In Figur 2 dargestellt ist Element 2 als Aufsicht auf einen exemplarischen Stator einer elektrischen Maschine. Als Grundebene ist Jochelement 4 dargestellt, auf welchem insgesamt 24 Zahnelemente 6 derart angeordnet sind, so dass diese aus der Zeichenebene herausragen würden. Hierdurch stellen sich die einzelnen Zahnelemente 6 lediglich als Rechtecke dar.

Zwischen den insgesamt exemplarisch 24 Zahnelementen 6 bilden sich 24 Nuten 8 aus. Eine Spulenwicklung, wie linksseitig dargestellt, besteht im Wesentlichen aus einer kreisförmigen, in sich geschlossenen Wicklung, welche zwischen zwei Nuten, in Figur 2 exemplarisch Nuten 19 sowie 22, angeordnet ist. Bei einer Spulenwicklung würden im Weiteren zur selben Phase gehörende Wicklungen beispielsweise zwischen Nut 22 und Nut 1 sowie zwischen Nut 16 und Nut 19 angeordnet sein.

Bei der rechtsseitig dargestellten Wellenwicklung wiederum sind die einzelnen Leiterelemente 14a,b des ersten und zweiten Stromzweiges der Phase U wellenförmig sämtliche Zahnelemente 6 umlaufend dargestellt. So wird Leiterelement 14a von außen über Nut 1 eingebracht, verläuft innen liegend zu Nut 4, durchquert diese, läuft außen liegend zu Nut 7, durchquert diese wiederum, läuft daraufhin innen liegend zu Nut 10, durchquert diese wiederum und verläuft außen liegend weiter zu Nut 13. Die Wicklungsform würde nun, in Figur 2 jedoch nicht näher dargestellt, auch linksseitig vergleichbar weiterlaufen. Leiterelement 14b wird in Figur 2 nach Leiterelement 14a des ersten Stromzweiges in dieselben Nuten eingebracht. Somit würde Leiterelement 14b ohne besondere Maßnahmen in der zweiten Nutschicht 12b angeordnet, während Leiterelement 14a in der ersten Nutschicht 12a und somit am Nutgrund anliegend angeordnet sein.

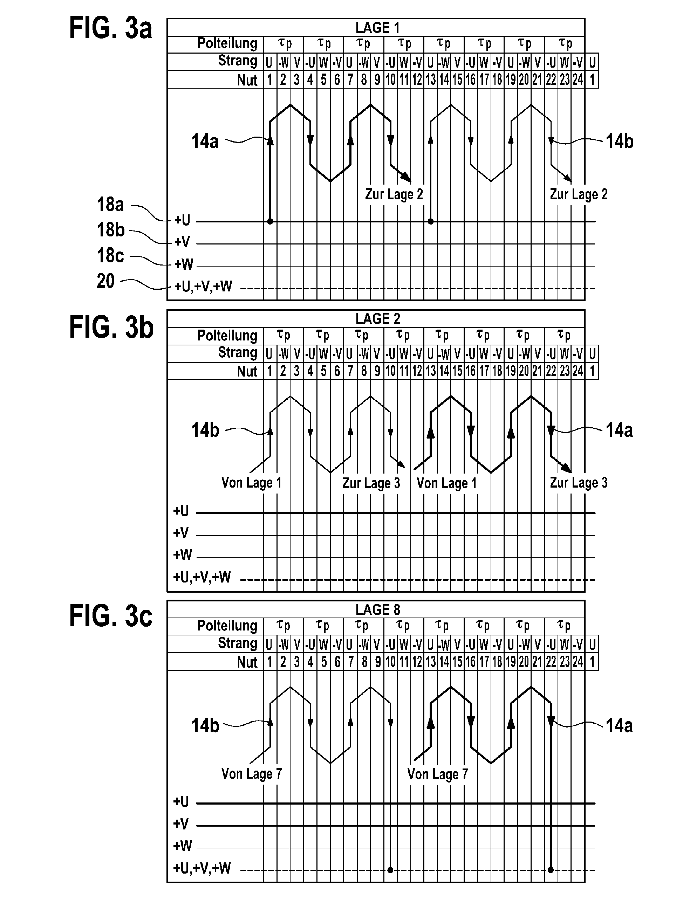

Weiter Bezug nehmend auf Figuren 3a-e ist eine exemplarische Ausgestaltung einer Wellenwicklung mit zwei parallelen Stromzweigen und acht Nutschichten dargestellt.

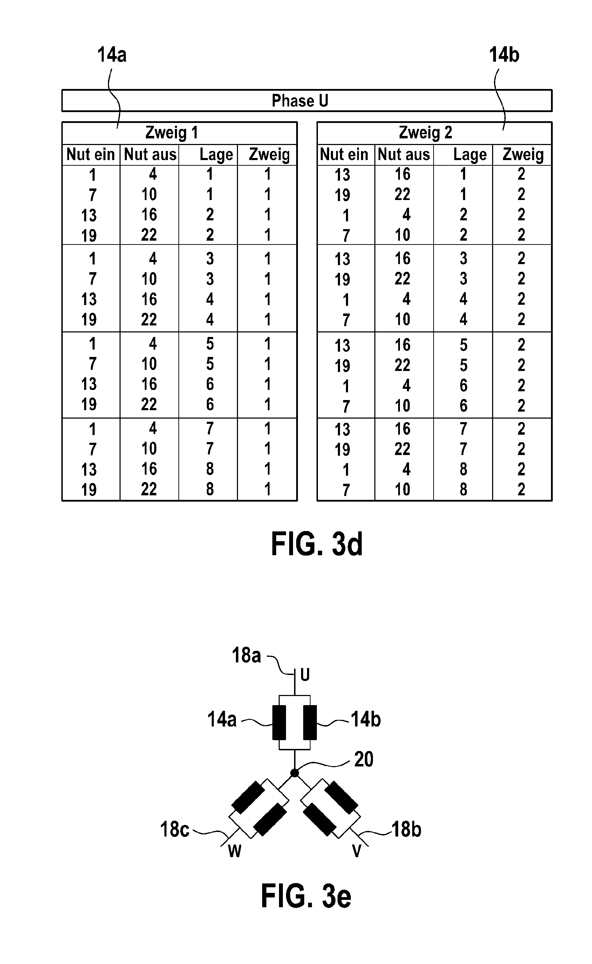

Figur 3 zeigt eine exemplarische Ausgestaltung einer Wellenwicklung und bezieht sich hierbei auf eine Statorausgestaltung, wie in Figur 2 dargestellt. In den derartigen Verlaufsskizzen bzw. Wicklungsskizzen wird jeweils nur eine Phase, exemplarisch Phase U, näher ausgeführt. Die weiteren Phasen V und W ergäben sich durch die Verwendung der entsprechenden Phase sowie dem Verschieben der jeweiligen Anordnung der Stromzweige um eine bzw. zwei Nuten.

In Figur 3 werden die parallelen Stromzweige unter Verwendung von insgesamt acht Lagen und somit acht Nutschichten dargestellt. Wie Figur 3a zu entnehmen, verläuft Leiterelement 14a, ausgehend von Phase 18a U, in Nut 1 ein und in Nut 4 wieder aus, Nut 7 ein sowie Nut 10 wieder aus. Gleiches erfolgt bei Leiterelement 14b um eine halbe Umdrehung bzw. zwölf Nuten versetzt. Leiterelement 14b läuft von Phasenanschluss U in Nut 13 ein, Nut 16 aus, Nut 19 ein sowie Nut 22 aus.

Gemäß Figur 3a werden die beiden Leiterelemente 14a,b nachfolgend in Lage 2 fortgesetzt. Dies ist Figur 3b zu entnehmen. Hierbei wird zunächst Leiterelement 14b in der ersten Nut 8, jetzt jedoch der zweiten Lage bzw. zweiten Nutschicht 12b, eingebracht, läuft in Nut 4 aus, Nut 7 ein sowie Nut 10 aus und würde, als detaillierte Übersicht nicht dargestellt, nun in Lage 3 fortgesetzt werden. Vergleichbar ist hierzu Leiterelement 14a, welches in Lage 2 bzw. Nutschicht 12b in Nut 13 einläuft, Nut 16 ausläuft, Nut 19 einläuft sowie nachfolgend Nut 22 wieder ausläuft, um in Lage 3 fortgesetzt zu werden. In Figur 3c dargestellt ist der Verlauf in der achten Lage bzw. achten Nutschicht 12h mit Anschluss an Sternpunkt 20.

Die detaillierte Anordnung der einzelnen Leiterelemente 14a,b in den weiteren Nutschichten 3 bis 7 mag Figur 3d entnommen werden. Dort angezeigt ist für jeden Zweig bzw. jedes Leiterelement 14a,b die ein- bzw. auslaufenden Nuten 8 der jeweiligen Lage bzw. Nutschicht 12 angezeigt. In der vom Nutgrund gesehen äußersten, achten Lage bzw. Nutschicht 12h läuft Leiterelement 14b von Lage 7 kommend in der achten Lage in Nut 1 ein, Nut 4 aus, Nut 7 ein sowie Nut 10 aus und wird daraufhin mit Sternpunkt 20 verbunden. Gleiches erfolgt für Leiterelement 14b, von Lage 7 einlaufend in Nut 13, auslaufend Nut 16, einlaufend Nut 19 sowie auslaufend Nut 22 und nachfolgend angeschlossen an Sternpunkt 20. Eine Ersatzschaltung der einzelnen Stränge bzw. Phasen U, V und W in Sternschaltung mag Figur 3e entnommen werden.

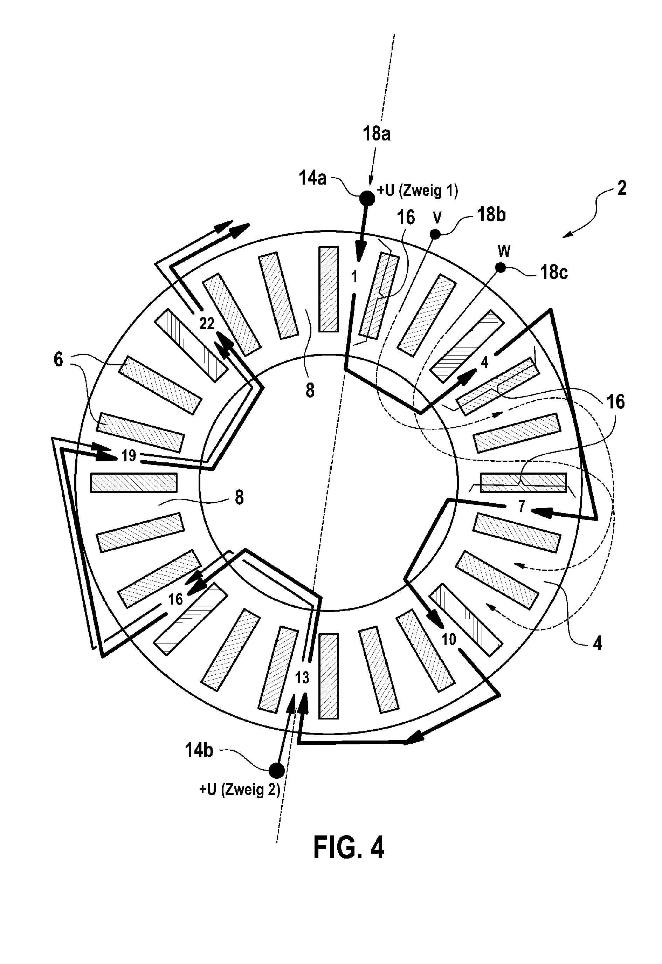

In Figur 4 dargestellt ist exemplarisch die Anordnung der Stromzweige 1 und 2 bzw. Leiterelemente 14a,b in der ersten Nutschicht 12a (Leiterelement 14a,b) sowie zweite Nutschicht 12b (nur Leiterelement 14a).

Sowohl Leiterelement 14a als auch Leiterelement 14b in der ersten Nutschicht 12b laufen von Phase U 18a ausgehend in erster Nut 8 bzw. dreizehnter Nut 8 ein und verlaufen in Wellenform durch die einzelnen Nuten 1, 4, 7, 10 (Leiterelement 14a) bzw. 13, 16, 19, 22 (Leiterelement 14b). In Figur 4 gut zu sehen ist, dass das zweite Element 14a in Nut 13, 16, 19 und 22 auf bzw. über dem Leiterelement 14b zu liegen kommt und somit in Nutschicht 12b angeordnet ist. Eine entsprechende Wicklung durch alle acht Nutschichten ergibt sich in Figur 4 gemäß der expliziten Anleitung der Figuren 3a-e.

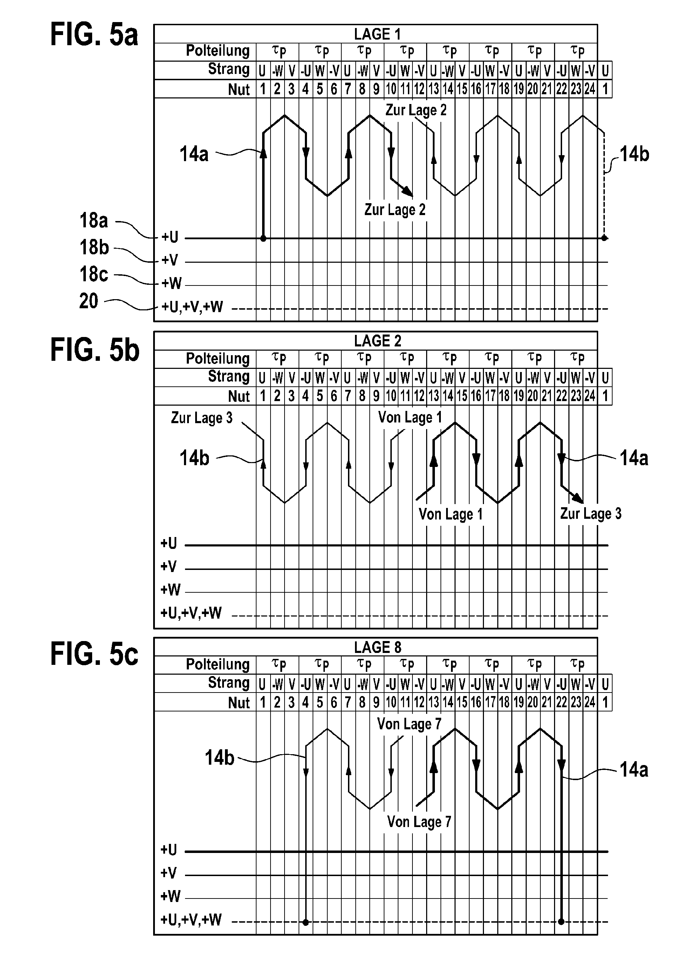

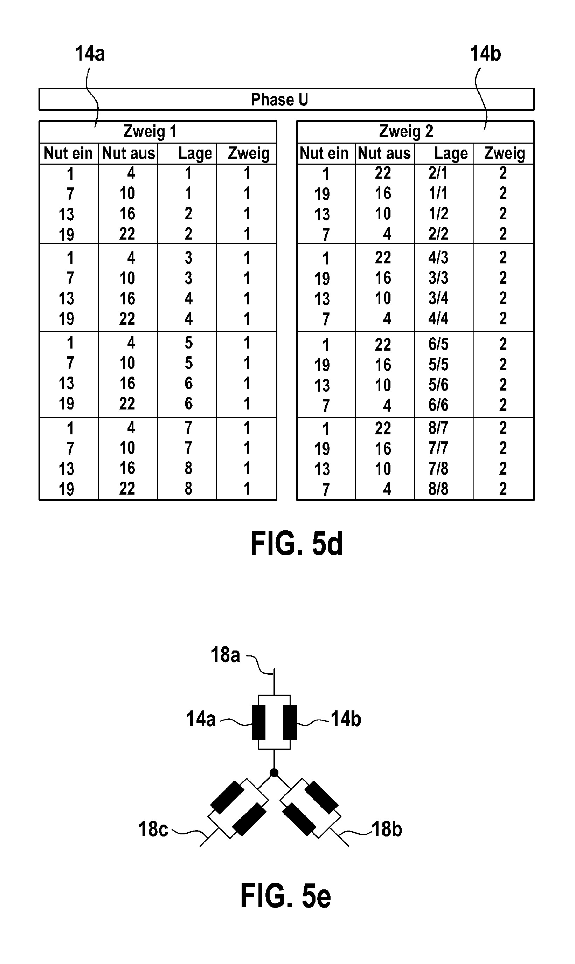

Weiter Bezug nehmend auf Figuren 5a-e, wird eine Splitwave-Wellenwicklung mit zwei parallelen Zweigen, verflechtet mit acht Nutschichten dargestellt.

Die Splitwave-Wellenwicklung gemäß Figuren 5a-e ergibt sich im Wesentlichen vergleichbar mit der Wicklung gemäß Figur 3, wobei jedoch beide Leiterelemente 14a,b im Wesentlichen in Nut 1 einlaufen und nachfolgend jedoch gegenläufig bzw. im entgegengesetzten Uhrzeigersinn wellenförmig durch die Nuten 8 und die jeweiligen Nutschichten 12 verlaufen. Wie beispielsweise Figur 5d zu entnehmen, wird hierbei jedoch Leiterelement 14b, da es genauso wie Leiterelement 14a über erste Nut 8 eingebracht wird, in der zweiten Lage bzw. zweiten Nutschicht 12b in der ersten Nut 8 eingebracht, verläuft jedoch aufgrund des entgegengesetzten Verlaufs zum Leiterelement 14a bereits in Nut 22 wieder in Lage 1 bzw. Nutschicht 12a.

Die Angaben der Lagen bzw. Nutschichten 12 des Leiterelements 14b in Figur 5d zeigen hierbei aus dem ersten Zahlenwert im Wesentlichen den Lagenverlauf bzw. Nutschichtverlauf in der jeweiligen Nut an, während der zweite Zahlenwert anzeigt, auf welche Nutschicht 12 nach Verlassen der jeweiligen Nut gewechselt wird. Die Gegenläufigkeit der zwei parallelen Stromzweige gemäß Splitwave-Wellenwicklung der Figuren 5a-e zieht sich durch sämtliche Lagen 2 bis 8 und wird wie in Figur 5c dargestellt wieder am Sternpunkt 20 in Lage 8 terminiert.

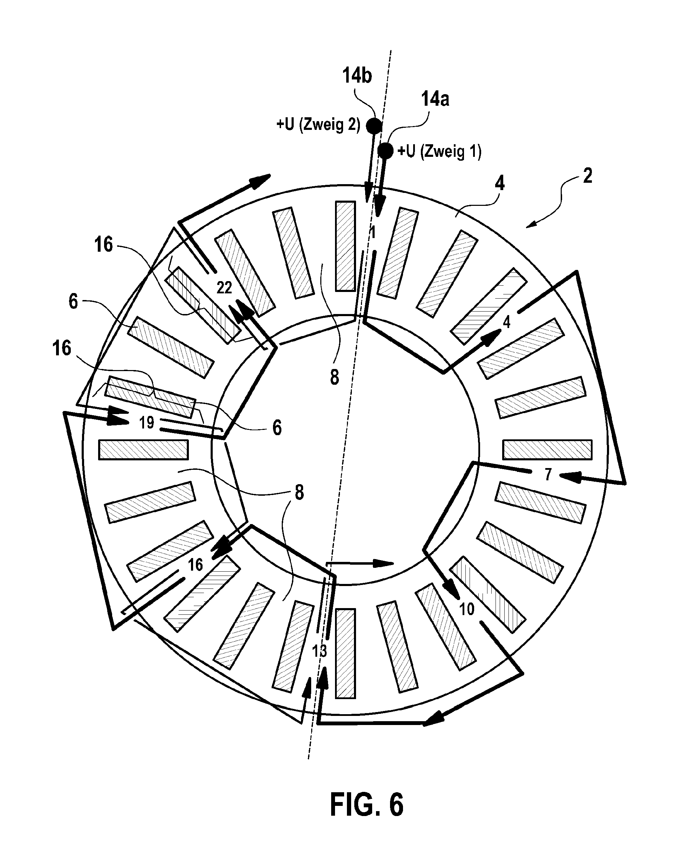

Die Splitwave-Wellenwicklung gemäß Figuren 5a-e wird nochmals aus anderer Perspektive an Element 2 in Figur 6 dargestellt. Leiterelement 14a,b laufen gemeinsam in Nut 1 ein, sind jedoch nach Verlassen von Nut 1 gegenläufig orientiert und winden sich im Weiteren durch Nuten 4, 7 und 10 (Leiterelement 14a) bzw. Nuten 22, 19, 16 und 13 (Leiterelement 14b) in der ersten Nutschicht 12a. Beide Leiterelemente 14a,b laufen wiederum gemeinsam und von ihrer Stromrichtung parallel durch Nut 13, wobei das Element 14a in der ersten Lage bzw. Nutschicht 12a und Leiterelement 14a in der zweiten Lage bzw. Nutschicht 12b verläuft.

Im Übrigen ist allgemein anzumerken, dass von parallelen Stromzweigen Nuten insbesondere gemeinsam in identischer Stromflussrichtung durchlaufen werden mögen.

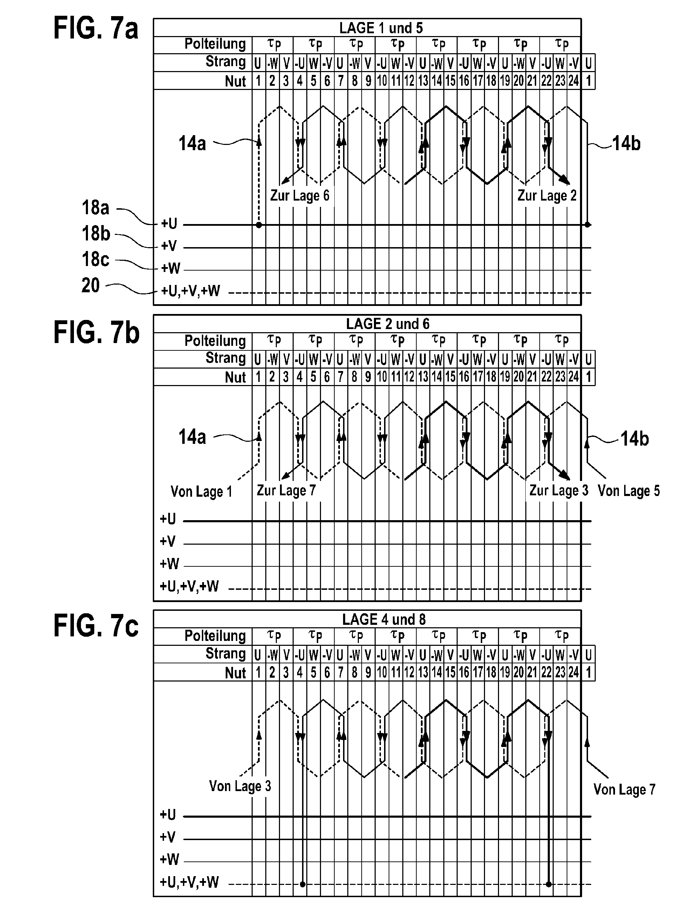

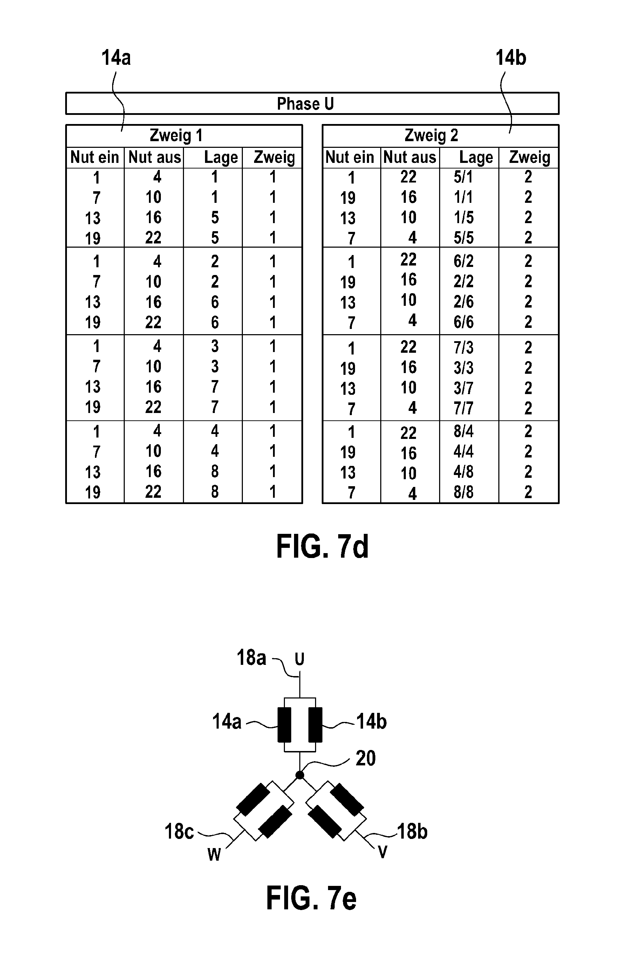

Weiter Bezug nehmend auf Figuren 7a-e wird eine Splitwave-Wellenwicklung mit zwei parallelen Stromzweigen, welche jedoch lagenübergreifend bzw. nutschichtübergreifend angeordnet sind, dargestellt. So stellt Figur 7a gemeinsam die Lagen 1 und 5 dar, wobei die gestrichelten Verläufe die Lage 1 und die durchgezogenen Verläufe der Leiterelemente 14a, b den Verlauf in Lage 5 darstellen.

Somit stellt die Splitwave-Wellenwicklung gemäß Figuren 7a-e eine massiv lagenübergreifende Wicklung dar. Beispielsweise für Leiterelement 14a beginnt dieses in Lage 1, wechselt nachfolgend in Lage 5, zurück in Lage 2, anschließend in Lage 6, zurück in Lage 3, anschließend in Lage 7, anschließend zurück in Lage 4, um nachfolgend in Lage 8, wie in Figur 7c dargestellt, auf Sternpunkt 20 aufgeschaltet zu werden. Vergleichbar invers verläuft Leiterelement 14b, wie in Figur 7d dargestellt. Insbesondere diese Variante mag sich bei der Herstellung unter Verwendung von Wickelschablonen realisieren lassen.

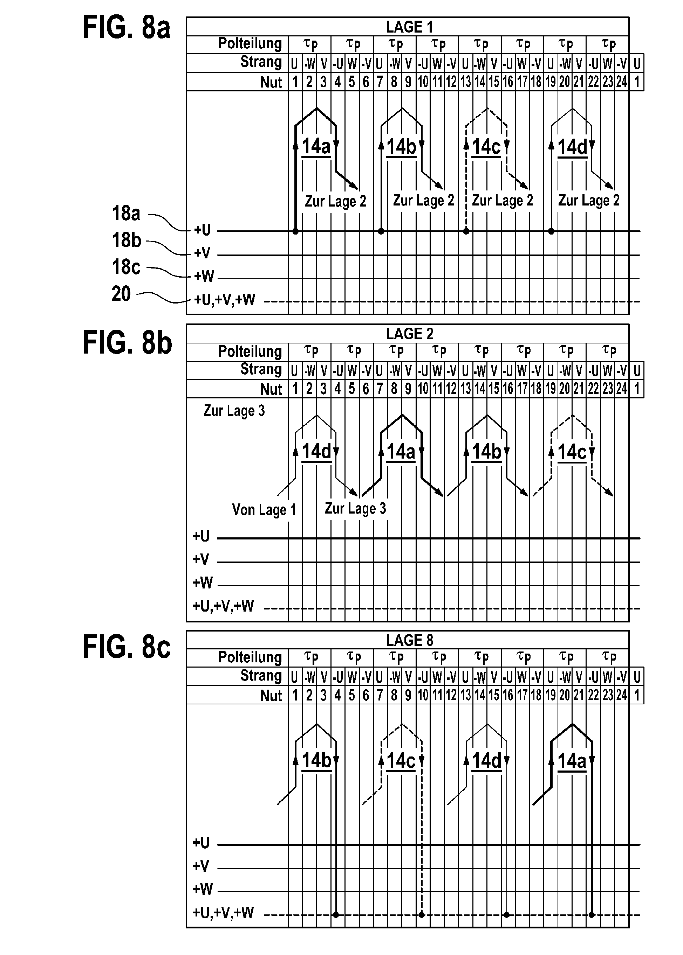

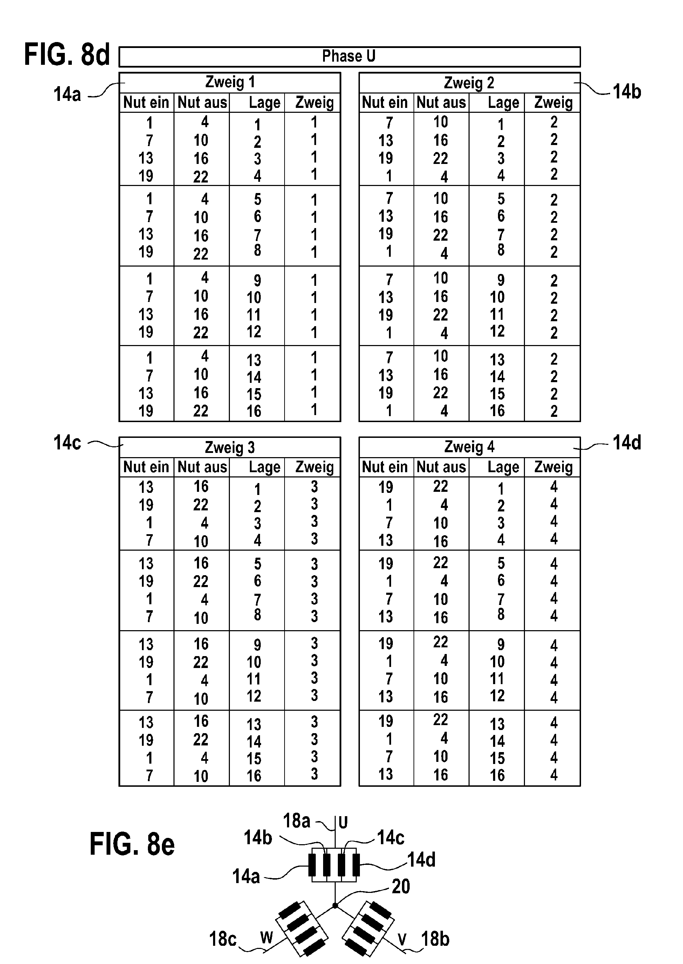

Gemäß Figuren 8a-e wird eine Wellenwicklung mit vier parallelen Stromzweigen und insgesamt 16 Nutschichten 12 dargestellt. Hierbei durchläuft jeder der vier parallelen Stromzweige in einer Lage bzw. Nutschicht 12 im Wesentlichen eine Schlaufe (durchläuft zwei Nuten 8) und wechselt nachfolgend für die nächste Schlaufe durch zwei Nuten 8 in die nächsthöhere Lage bzw. Nutschicht 12. Beispielsweise Leiterelement 14a gemäß Figur 8a tritt in Nut 1 ein, in Nut 4 aus und wechselt direkt in Nut 7 der Lage 2, um in Nut 10 auszutreten und von dort in Nut 13 in Lage 3 einzutreten. Vergleichbares ergibt sich für Leiterelemente 14b,c,d, jeweils um 90 Grad verdreht. Die einzelnen Leiterelemente 14a,b,c,d weisen somit eine um einen Viertelkreis verdrehte, identische Anordnung auf.

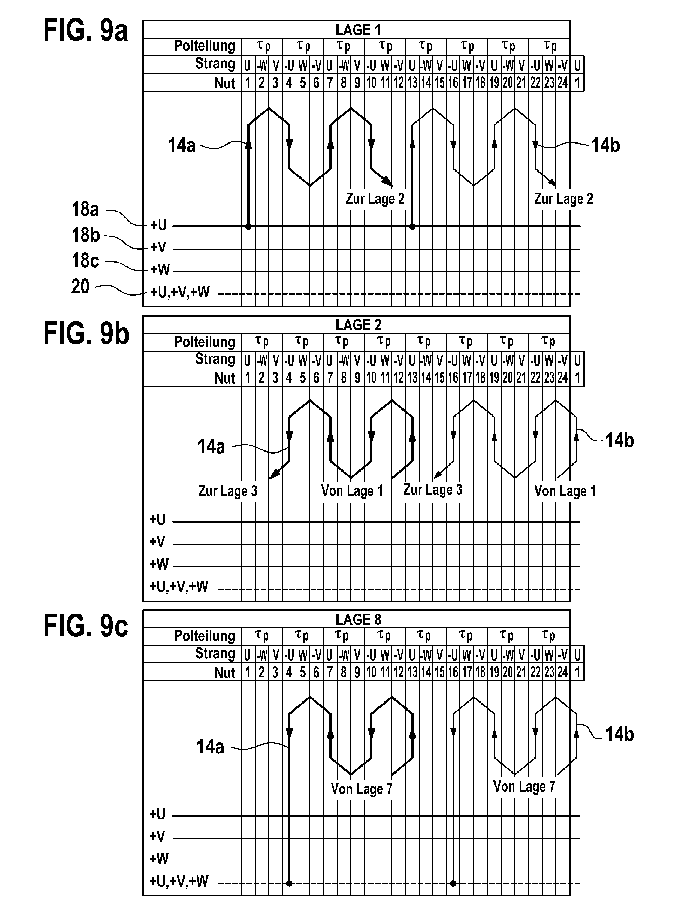

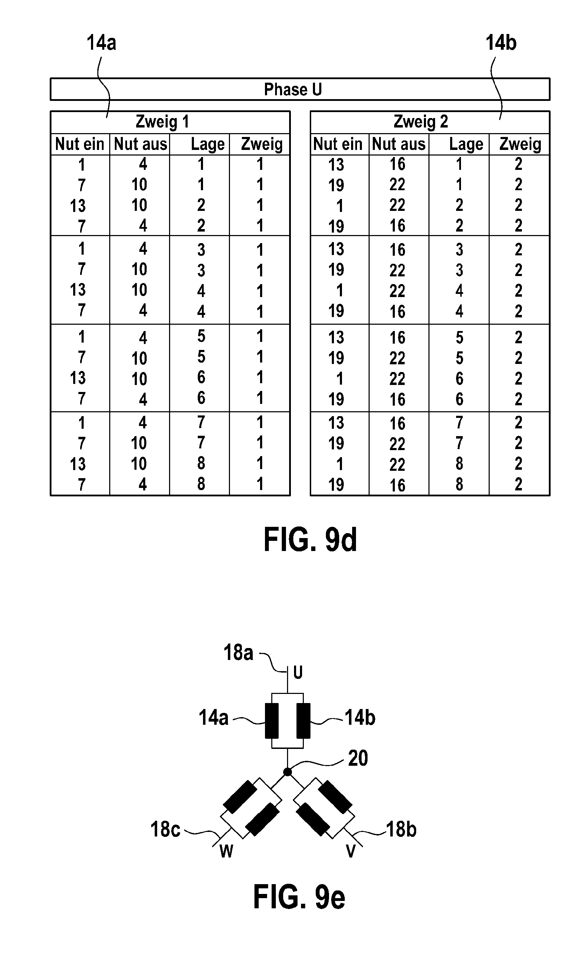

Weiter Bezug nehmend auf Figuren 9a-e wird eine Wellenspulenwicklung mit zwei parallelen Zweigen und insgesamt acht Lagen gemäß der vorliegenden Erfindung dargestellt.

Die Kombination aus Wellen- und Spulenwicklung ergibt sich hierdurch, dass jeder parallele Stromzweig im Wesentlichen in einem fest vorgegebenen Halbsegment des Elementes 2 verbleibt, ohne dass sich die Leiterelemente 14a,b im Wesentlichen überlagern. Bezug nehmend auf Figur 9a verläuft beispielsweise Leiterelement 14a in erster Lage der ersten Nut 8 nach 4 nach 7 nach 10, um hierbei in zweite Lage der 13. Nut 8 zu wechseln, die Wicklungsreihenfolge umzukehren (vgl. Figur 9b) und nun in Lage 2 von Nut 13 nach 10 nach 7 nach 3 und weiter nach 1 in die dritte Lage zu wechseln. In der dritten Lage wird wiederum der Wicklungssinn invertiert. Gleiches ergibt sich für Leiterelement 14b in den Nuten 13 bis 24. Somit überlagern sich die zwei parallelen Zweige bzw. Leiterelemente 14a,b ausschließlich in den Nuten 1 und 13 und stellen für sich genommen je halbseitigem Element 2 eine Spulenwicklung mit Wellenverlauf der einzelnen Leiterelemente 14a,b dar

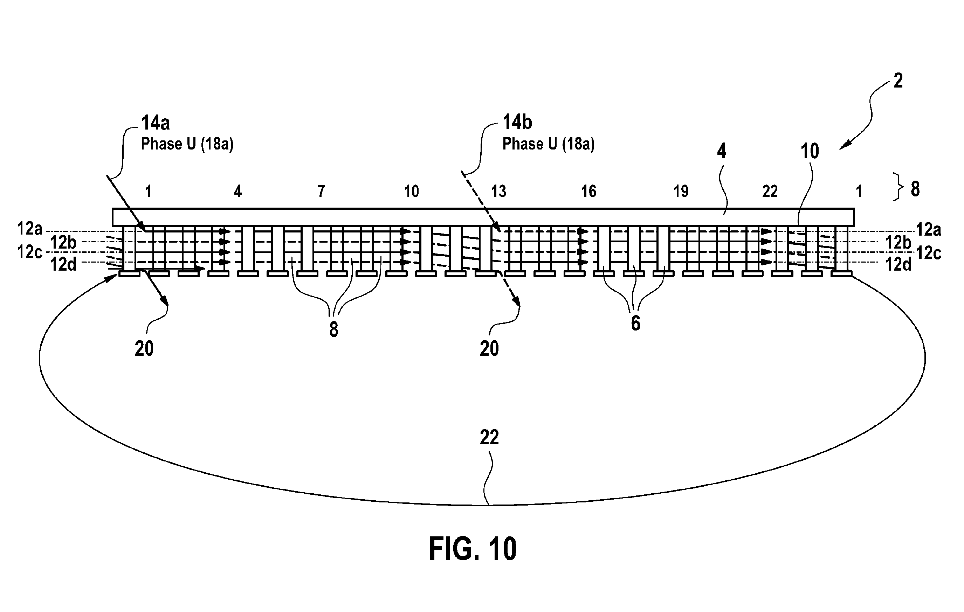

Weiter Bezug nehmend auf Figur 10 wird eine exemplarische Seitenansicht einer Wellenwicklung mit zwei parallelen Stromzweigen und 4 Nutschichten gemäß der vorliegenden Erfindung dargestellt.

Der im Wesentlichen kreisförmige Aufbau des Elementes 2 ist hierbei aufgelöst, an einer Stelle geöffnet bzw. "aufgeschnitten" und flach ausgerollt dargestellt. Eigentliche Kreisschluss des Elementes 2 wird durch Pfeil 22 angedeutet. Je nach konkreter Ausgestaltung der Wicklungsführung mag in Figur 10 die Innenseite des Elementes oder auch die Außenseite abgebildet sein.

Leiterelement 14a wird exemplarisch in der ersten Nutschicht 8, Leiterelement 14b in der 13ten Nutschicht 8 eingebracht. Gut zu erkennen ist die abwechselnde Lage der Leiterelemente 14a,b auf unterschiedlichen Seiten der Zahnelemente 6. So sind die beiden Leiterelemente 14a,b in Figur 10 exemplarisch zwischen erster und vierter, siebter und zehnter, 13ter und 16ter sowie 19ter und 22ter Nut 8 vor den Zahnelementen liegend angeordnet, während die Leiterelemente 14a,b zwischen vierter und siebter, zehnter und 13ter, 16ter und 19ter sowie 22ter und erster Nut 8 hinter den Zahnelementen liegend angeordnet sind.

Jedes Leiterelement 14a,b durchläuft exemplarisch jeweils die Hälfte des Elementes 2 auf einer bestimmten Nutschicht 12a,b,c,d um dann in eine nächsthöhere Nutschicht zu wechseln. Im Falle, dass ein Leiterelement 14a,b bereits auf der "höchsten" Nutschicht verläuft erfolgt indessen der Anschluss an Sternpunkt 20.

Nachfolgend angegeben sind exemplarische, beliebig kombinierbare Ausführungsbeispiele der vorliegenden Erfindung:
1. Komponente (2) für eine elektrische Maschine, aufweisend ein Jochelement (4), eine Mehrzahl von Zahnelementen (6), welche vom Jochelement (4) abstehen; welche im Wesentlichen parallel zueinander ausgerichtet sind, und welche beabstanded zueinander angeordnet sind und so zwischen zwei Zahnelementen (6) jeweils eine Nut (8) ausbilden, wobei jede Nut (8) im Bereich des Übergangs zwischen Jochelement (4) und Zahnelement (6) einen Nutgrund (10) aufweist, und wobei jede Nut (8) eine Mehrzahl von Nutschichten (12) aufweist, welche Nutschichten (12) einen definierten Abstand vom Nutgrund (10) aufweisen, und eine Mehrzahl von Leiterelementen (14), welche parallele Stromzweige ausbilden, und welche in zumindest einer Nut (8) angeordnet sind und in der Nut (8) einen Leiterabschnitt (16) ausbilden, dadurch gekennzeichnet, dass die Leiterelemente (14) derart in der zumindest einen Nut (8) angeordnet sind, so dass jeder Stromzweig pro Nutschicht (12) eine gleiche Anzahl an Leiterabschnitten (16) aufweist.
2. Komponente gemäß dem vorhergehenden Ausführungsbeispiel, wobei die Zahnelemente (6) auf dem Jochelement (4) im Wesentlichen kreisförmig angeordnet sind.
3. Komponente gemäß zumindest einem der vorhergehenden Ausführungsbeispiele, wobei die Mehrzahl der Leiterelemente (14) in den Nuten (8) eine Wicklung einer elektrischen Maschine ausbilden, wobei die Wicklung eine Wicklung ist aus der gruppe bestehend aus Wellenwicklung, Split-Wave-Wellenwicklung, Split-Wave-Wellenwicklung mit verflochtenen Leiterelementen, Split-Wave-Wellenwicklung mit gekreuzten Leiterelementen und Wellenspulenwicklung.
4. Komponente gemäß zumindest einem der vorhergehenden Ausführungsbeispiele, wobei die Komponente eine Mehrzahl von Phasenanschlüssen (18) aufweist, und wobei jeder Phasenanschluss (18) eine Mehrzahl von Leiterelementen (14) aufweist.
5. Komponente gemäß zumindest einem der vorhergehenden Ausführungsbeispiele,wobei die Komponente (2) zum Anschluss an ein Drehstromsystem eingerichtet ist.
6. Komponente gemäß zumindest einem der vorhergehenden Ausführungsbeispiele, wobei die Komponente (2) als Bestandteil eines Stators einer elektrischen Maschine ausgebildet ist.
7. Komponente gemäß zumindest einem der vorhergehenden Ausführungsbeispiele, wobei die Anzahl der Nuten (8) eine Anzahl ist aus der Gruppe bestehend aus drei Nuten, sechs Nuten, neun Nuten, zwölf Nuten, 15 Nuten, 18 Nuten, 21 Nuten, 24 Nuten, 27 Nuten, 30 Nuten, und x*N Nuten, wobei x die Anzahl der Phasen und N ein Integerwert ist.
8. Elektrische Maschine, aufweisend eine Komponente (2) gemäß zumindest einem der vorhergehenden Ausführungsbeispiele.
9. Fahrzeug, insbesondere Automobil, aufweisend eine elektrische Maschine und/oder eine Komponente (2) gemäß zumindest einem der vorhergehenden Ausführungsbeispiele.

## Patentansprüche

1. Stator einer elektrischen Maschine, aufweisend ein Jochelement (4), eine Mehrzahl von Zahnelementen (6), welche vom Jochelement (4) abstehen, wobei zwischen zwei Zahnelementen (6) jeweils eine Nut (8) ausgebildet ist, wobei jede Nut (8) im Bereich des Übergangs zwischen Jochelement (4) und Zahnelement (6) einen Nutgrund (10) aufweist, wobei in den Nuten eine Mehrphasenwicklung vorgesehen ist, die aus Zweigleitungen (14) besteht, die in den Nuten jeweils in einer vorbestimmten Lage (12) bezüglich dem Nutgrund (10) angeordnet und jeweils einer elektrischen Phase (18) zugeordnet sind, **dadurch gekennzeichnet, dass** zumindest eine Zweigleitung (14) zumindest einmal auf ihrem Verlauf durch die Nuten (8) ihre Lage (12) mit zumindest einer anderen Zweigleitung (14) tauscht.

2. Stator nach Anspruch 1, **dadurch gekennzeichnet, dass** in einer Nut (8) jeweils nur Zweigleitungen (14) der gleichen elektrischen Phase (18) angeordnet sind.

3. Stator nach einem der vorhergehenden Ansprüche, **dadurch gekennzeichnet, dass** die Zweigleitungen (14) jeweils mehrere Einzelleitungen umfassen.

4. Stator nach einem der vorhergehenden Ansprüche, **dadurch gekennzeichnet, dass** eine Lage (12) mindestens eine Einzelleitung aufweist und parallel zum Nutgrund (10) verläuft.

5. Stator nach einem der vorhergehenden Ansprüche, **dadurch gekennzeichnet, dass** die Zweigleitungen (14) mittels Einzugstechnik in die Nuten (8) eingelegt sind.

6. Stator nach einem der vorhergehenden Ansprüche, **dadurch gekennzeichnet, dass** in den Nuten (8) mindestens zwei Lagen (12) von Zweigleitungen (14) vorgesehen sind.

7. Stator nach einem der vorhergehenden Ansprüche, **dadurch gekennzeichnet, dass** die Mehrphasenwicklung eine Wellenwicklung, Split-Wave-Wellenwicklung, Split-Wave-Wellenwicklung mit verflochtenen Einzelleitungen, Split-Wave-Wellenwicklung mit gekreuzten Einzelleitungen und Wellenspulenwicklung.ist.

8. Stator nach einem der vorhergehenden Ansprüche, **dadurch gekennzeichnet, dass** mindestens zwei elektrisch parallele Zweigleitungen (14) pro elektrischer Phase (18) vorgesehen sind.

9. Stator nach einem der vorhergehenden Ansprüche, **dadurch gekennzeichnet, dass** die elektrisch parallelen Zweigleitungen(14) in der gleichen Nut (8) beginnen und in entgegengesetzte Umfangsrichtung verlaufen.

10. Stator nach einem der vorhergehenden Ansprüche, **dadurch gekennzeichnet, dass** die elektrisch parallelen Zweigleitungen (14) in unterschiedlichen Nuten (8) beginnen und in die gleiche Umfangsrichtung verlaufen.
